# EUROPEAN PATENT APPLICATION

(11) **EP 4 841 656 A1**
(43) Date of publication of application: **18.11.2026**
(21) Application number: 26167893.2
(22) Date of filing: 26.03.2026
(51) Int. Cl.: H01B 3/12

(54) **ELECTRICAL INSULATION SYSTEM AND METHOD OF FORMING**

(30) Priority: 15.05.2025 US 202519208977
(71) Applicant: GE Aviation Systems LLC, Grand Rapids, MI 49512 (US)
(72) Inventor: ZHANG, Lili, Dayton, 45409 (US); CALEBRESE, Christopher Michael, Lynn, 01910-0002 (US); GULLEY, Jason Randall, Dayton, 45409 (US); JIA, Xiaochuan, Dayton, 45409 (US); YAGIELSKI, John Russell, Niskayuna, 12309-1027 (US); ZHANG, Wei, Niskayuna, 12309-1027 (US)
(74) Representative: Openshaw & Co.

(57) **Abstract**

A thermally conductive ceramic matrix composite (CMC) electrical insulator (150) is disclosed. The CMC electrical insulator (150) is coupled to an electrical conductor (180) of an electrical device (100), and includes a CMC layer (151) comprising: an electrically insulative, thermally conductive matrix material (155); and an electrically insulative, thermally conductive inorganic ceramic fiber material (157).

## Description

### TECHNICAL FIELD

This disclosure relates to electrical insulation systems, and more specifically to an electrically insulative and thermally conductive electrical insulation system and a method of forming the electrical insulation system.

### BACKGROUND

Electrical devices, such as electric motors and generators, transformers, power converters, power overlay modules (POLs), printed circuit boards (PCBs), bus bars, conductive substrates, and the like, include electrical conductors which carry an electrical current to perform work. The electrical current may generate heat in the electrical conductors. Dissipating this heat can reduce the likelihood of thermal failure of the electrical device, and can improve the device operation. For example, the heat generated in an electrical conductor may be reduced by conducting or transporting the heat from the electrical conductor to another component or location where it may be dissipated.

The electrical conductors in electrical devices are often electrically insulated by at least a partial covering (e.g., a sleeve) of an electrically insulative material (e.g., an organic polymer film) to provide electrical insulation from other conductors (e.g., a grounded conductor) and personnel. However, materials with good electrical insulating properties often exhibit poor thermal conductivity, which hinders the dissipation of heat.

### BRIEF DESCRIPTION OF THE DRAWINGS

A full and enabling disclosure of the present description, including the best mode thereof, directed to one of ordinary skill in the art, is set forth in the specification, which refers to the appended FIGS., in which:
FIG. 1A illustrates an aspect of electrical insulation system coupled to an electrical conductor of an electrical device, in accordance various aspects described herein.
FIG. 1B illustrates another aspect of an electrical insulation system coupled to an electrical conductor of an electrical device, in accordance various aspects described herein.
FIG. 1C illustrates yet another aspect of an electrical insulation system coupled to an electrical conductor of an electrical device and having another electrically insulating layer disposed therebetween, in accordance various aspects described herein.
FIG. 1D illustrates another aspect of an electrical insulation system coupled to an electrical conductor of an electrical device and having a diamond layer disposed therebetween, in accordance various aspects described herein.
FIG. 2 illustrates a perspective view of an engine coupled to a generator that includes a set of ceramic matrix composite electrical insulators, in accordance with various aspects described herein.
FIG. 3 illustrates a partial front view of a stator assembly and a rotor assembly of an electrical device, in accordance with various aspects described herein.
FIG. 4 illustrates a partial front view of a stator assembly of an electrical device, in accordance with various aspects described herein.
FIG. 5 illustrates a partial front view of a rotor assembly of an electrical device, in accordance with various aspects described herein.
FIG. 6 depicts a flow diagram of a method of forming an insulation system in accordance with various aspects as described herein.

### DETAILED DESCRIPTION

Aspects of the present disclosure are directed to a electrical insulation system that is both electrically insulative and thermally conductive. for electrically insulating an electrical conductor of any electrical device while conducting heat away from the electrical conductor during operation. For brevity of description and ease of understanding, aspects of the disclosure are described in terms of particular electrical devices (e.g., a motor, a bus bar, etc.), but it is understood that the disclosure is not so limited and applies, *mutatis mutandis,* equally to a ceramic matrix composite electrical insulator for electrically insulating any electrical conductor for any electrical device, without departing from the scope of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all aspects described herein should be considered exemplary.

As used herein, the terms "first," "second," and "third" and the like, can be used interchangeably to distinguish one component from another and are not intended to signify location or importance of the individual components. The singular forms "a", "an", and "the" include plural references unless the context clearly dictates otherwise. Furthermore, as used herein, the term "set" or a "set" of elements can be any number of elements, including only one. All directional references (e.g., inner, outer, upper, lower, radial, axial, proximal, distal, upper, lower, upward, downward, left, right, lateral, front, back, top, bottom, above, below, vertical, horizontal, clockwise, counterclockwise, upstream, downstream, aft, etc.) are only used for identification purposes to aid the reader's understanding of the present disclosure, and do not create limitations, particularly as to the position, orientation, or use of the present disclosure. It is also to be understood that the specific aspects illustrated in the attached drawings, and described in the following specification, are simply exemplary aspects of the disclosure. Hence, specific dimensions and other physical characteristics related to the aspects disclosed herein are not to be considered as limiting.

Terms of approximation, such as "about," "approximately," "generally," and "substantially," are not to be limited to the precise value specified. In at least some instances, the approximating language may correspond to the precision of an instrument for measuring the value, or the precision of the methods or machines for constructing or manufacturing the components and systems. In at least some instances, the approximating language may correspond to the precision of an instrument for measuring the value, or the precision of the methods or machines for constructing or manufacturing the components and systems. For example, the approximating language may refer to being within a 1, 2, 4, 5, 10, 15, or 20 percent margin in either individual values, range(s) of values and endpoints defining range(s) of values. When used in the context of an angle or direction, such terms include within ten degrees greater or less than the stated angle or direction. For example, "generally vertical" includes directions within ten degrees of vertical in any direction, e.g., clockwise or counter-clockwise.

The term "at least one of" in the context of, e.g., "at least one of A, B, and C" refers only A, only B, only C, or any combination of A, B, and C.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Chemical elements are discussed in the present disclosure using their common chemical abbreviation, such as commonly found on a periodic table of elements. For example, hydrogen is represented by its common chemical abbreviation H; helium is represented by its common chemical abbreviation He; and so forth.

Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to each other. The terms "coupled," "fixed," "applied to," "attached to" and the like refer to both direct coupling, fixing, or attaching, as well as indirect coupling, fixing, or attaching through one or more intermediate components or features, unless otherwise specified herein. Also as used herein, the term "coupled" does not necessarily infer a fixed coupling.

The terms "disposed on" or "in contact" refer to configurations in which at least portion of a first component (e.g., an insulator) is disposed on or in contact with a portion of a second component (e.g. a conductor or substrate), and does not necessarily connotate that the entirety of the first component is disposed on the second component, nor that the entirety of the second component be covered. For example, an electrical insulator may be coupled to or disposed on top of a portion of a surface of an electrically conductive bus bar or may partially cover a portion of the bus bar. Similarly, a portion of the electrical insulator may be coupled to the bus bar and another portion may be coupled to a third component.

For example, in the present disclosure, when an electrical insulator is being described as "contacting" or "coupled to", another component (e.g., an electrical conductor), it is to be understood that the electrical insulator and component can either be directly contacting each other or have another layer or feature (e.g., an adhesive) between the two, unless expressly stated to the contrary. Thus, these terms are simply describing the relative position of the elements to each other.

As used herein, the term "stiffness" refers to the extent to which a structure resists deformation in response to force. Stiffness can be defined as the ratio of force to displacement of the object under said force. Stiffness can include resisting deformation in response to force applied from various directionalities, whereby the stiffness can represent an axial stiffness, tensile stiffness, compression stiffness, torsional stiffness, or shear stiffness in non-limiting examples.

As used herein, the term "elasticity" is defined as the modulus of elasticity (Young's modulus) under tension or compression, and may relate to an elasticity for a particular material or structure made of such material, such as the engine components described herein. The elasticity can represent the stress per unit area relative to the local strain or proportional deformation thereof.

As used herein, the term "porosity" refers to a measure of void spaces in a material. It is expressed as a fraction (e.g., a percentage) of a volume of voids to the total volume of the material.

The "temperature capacity" of an insulation material refers to the maximum continuous temperature at which it can operate for a specified period (usually 20,000 hours) before experiencing significant degradation in its insulating properties, typically measured in degrees Celsius (°C).

As used herein, the terms "electrically insulative", "insulator", or "insulation" refers to a material that exhibits a low electrical conductivity (for example, less than about 10-8 siemens per meter (S/m)). Unless stated otherwise, as used herein, the term "insulative" refers to electrical insulation, and the term "insulator" refers to an electrical insulator.

As used herein, the term "conductivity" refers to a property of a material that allows a flow of charge or electric current therethrough. Also as used herein, the term "electrical conductor" refers to a material that exhibits a relatively high electrical conductivity (for example, greater than about 10-7 S/m). Unless stated otherwise, as used herein, the term "conductive" refers to electrical conductivity, and the term "conductor" refers to an electrical conductor.

As used herein the term "resistance", "resistivity", or "electrical resistance" refers to a property of a material, layer, or element indicative of an opposition to the movement of electrons across or through the material, layer, or element. Unless otherwise indicated, the terms "resistance" and "resistivity" refer to an electrical property of a material.

As used herein, the term "dielectric" refers to an electrically insulative material that can be polarized by an electric field.

As used herein, the term "ohms per square" (ohms/sq) refers to a unit of an electrical measurement of surface resistivity across any given square area of a surface of a material.

As used herein, the term "dielectric breakdown strength" refers to a maximum voltage that a material can withstand before it becomes electrically conductive. Dielectric breakdown strength can be measured in volts per unit thickness (e.g., V/mm or Volts per mil.) Dielectric breakdown strength can be calculated by dividing a breakdown voltage by a thickness of the material.

As used herein, the term "dielectric loss" refers to an inherent dissipation of electromagnetic energy (e.g., heat) by a dielectric material dielectric material. It can be parameterized in terms of either the loss angle *δ* or the corresponding loss tangent tan(*δ*).

As used herein, the terms "arc," "arcing," "electrical arc", "arcing event," or "arc fault" will refer to an unintended or undesired conduction of electric current across a traditionally non-conductive medium, such as air.

As used herein, the term "partial discharge" refers to a localized electrical discharge that only partially bridges the insulation between conductors, and which may or may not occur adjacent to an electrical conductor. Partial discharges are in general a consequence of local electrical stress concentrations in or on an insulator. For example, in some instances, a partial discharge can occur on the surface of an insulator (e.g., a surface partial discharge). In other instances, a partial discharge can occur within or internal to the insulation (e.g., an internal partial discharge). Partial discharges generally do not cause electrical failure (e.g., an arcing condition) immediately. However, such discharges can be repeated and can ultimately break down various insulating layers over time (e.g., of an electric winding assembly). This, in turn, can place the electric winding assembly at higher risk for arcing conditions to occur over time through the degradation of the insulating layers. Environmental conditions and performance parameters such as, for example, altitude and operating voltages, respectively, can increase the likelihood of an arc fault event occurring. In general, partial discharges can be categorized into internal partial discharge, surface partial discharge, and corona discharge.

As used herein. the terms "corona" or "corona discharge" refer a type of partial discharge that occurs in gaseous media around electrical conductors when an electrostatic potential gradient along a surface of an electrical insulation in air or another gaseous medium exceeds a certain value. In some cases, the corona discharge can produce sound, heat, light, or ionized particles which degrade the electrical insulation and can lead to electrical failure of nearby insulation.

The term "composite," as used herein, is indicative of a component having two or more materials. A composite can be a combination of at least two or more metallic, non-metallic, or a combination of metallic and non-metallic elements or materials. Examples of a composite material can be, but not limited to, a polymer matrix composite (PMC), a ceramic matrix composite (CMC), a metal matrix composite (MMC), carbon fiber, polymeric resin, thermoplastic, bismaleimide (BMI), polyimide materials, epoxy resin, glass fiber, and silicon matrix materials.

As used herein, "CMC" refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al2O3), silicon dioxide (SiO2), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al2O3), silicon dioxide (SiO2), aluminosilicates, or mixtures thereof), or mixtures thereof. Optionally, ceramic components (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to as their combination of type of fiber/type of matrix. For example, C/SiC for carbon-fiber-reinforced silicon carbide, SiC/SiC for silicon carbide-fiber-reinforced silicon carbide, SiC/SiN for silicon carbide fiber-reinforced silicon nitride, SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide (Al2O3), silicon dioxide (SiO2), aluminosilicates, and mixtures thereof. Aluminosilicates can include crystalline materials such as mullite (3Al2O3·2SiO2), as well as glassy aluminosilicates.

In certain non-limiting examples, the reinforcing fibers may be bundled and/or coated prior to inclusion within the ceramic matrix. For example, bundles of the fibers may be formed as a reinforced tape, such as a unidirectional reinforced tape. A plurality of the tapes may be laid up together to form a preform component. The bundles of fibers can be impregnated with a slurry composition prior to forming the preform or after formation of the preform. The preform may then undergo thermal processing and subsequent chemical processing, such as melt-infiltration with silicon, to arrive at a component formed of a CMC material having a desired chemical composition. For example, the preform may undergo a cure or burn-out to yield a high char residue in the preform, and subsequent melt-infiltration with silicon, or a cure or pyrolysis to yield a silicon carbide matrix in the preform, and subsequent chemical vapor infiltration with silicon carbide. Additional steps may be taken to improve densification of the preform, either before or after chemical vapor infiltration, by injecting it with a liquid resin or polymer followed by a thermal processing step to fill the voids with silicon carbide. CMC material as used herein may be formed using any known or hereinafter developed methods including but not limited to melt infiltration, chemical vapor infiltration, polymer impregnation pyrolysis (PIP), or any combination thereof.

The reinforcing fibers can be at least portions of individual filaments or strands. As used herein, a "ceramic fiber tow," a "fiber tow," or simply a "tow" refers to a bundle of a plurality of individual fibers, filaments, or loose strands. The filaments of a tow may be randomly intermingled or arranged in a pattern, and/or may be continuous or non-continuous. For example, a tow may include broken filaments or filament segments. As another example, the filaments of a tow may be substantially parallel, twisted, or otherwise arranged. A tow may act substantially in the same manner as a single or individual filament. It will also be appreciated that an "individual ceramic filament," or simply an "individual filament," as used herein, refers to a singular or non-bundled elongate ceramic member.

As used herein, a "composite layer" or "CMC layer" refers to a structure or a layer including one or more plies of any suitable composite material. As used herein, the term "ply" refers to a layer including a CMC material and a reinforcing fiber material. Similarly, the term "plies" refers to one or more ply.

The term "metallic" or "metal" or "metal alloy" as used herein is indicative of a material that includes metal such as, but not limited to, titanium, iron, aluminum, stainless steel, brass, copper, and nickel alloys. A metallic material or metal alloy can be a combination of at least two or more elements or materials, where at least one is a metal.

As used herein, the term "electrical device" refers to any electrical component, apparatus, machine, or system, or portion thereof, that operatively converts, transmits or otherwise uses electricity to perform work.

At least some aspects of the disclosure described herein will be discussed, by way of non-limiting example only, for brevity of description, in the context of an electrical device, having a rotor arranged to rotate with respect to a stator. It should be understood, however, that aspects of the disclosure described herein are not so limited and can have general applicability within other electrical machines, devices, components, or systems. For example, the disclosure can have applicability in any electrical device having an electrical insulator, and may be used to provide benefits in industrial, commercial, and residential applications.

For example, electrical devices, such as conventional wound-rotor generators, are a source of electrical energy for industrial and commercial applications. They are commonly used to convert mechanical power output of steam turbines, gas turbines, reciprocating engines and hydro-turbines into electrical power. Typically, these electrical devices include a central rotatable assembly or "rotor" that is circumscribed by a stationary assembly or "stator". A small air gap separates the rotor and stator. The rotor can include a rotatable element defining a central rotational axis and defining a periphery. The rotor typically includes a rotatable shaft and a rotor core having one or more sets of conductive rotor windings. The rotor windings can be wound about the periphery. The rotor windings are typically axially wound around a set of posts or rotor teeth defining slots therebetween. The number of sets of rotor windings typically define the number of electrical phases of the electrical device. A portion of the windings (e.g., an end turns portion) of conventional rotors typically extend past or overhang the rotor. The rotor winding end turns in some electrical devices are supported and/or covered by a housing, cover, or other structure. In general, the electrical device includes a rotor, a stator, and windings. It may be noted that the term "windings" typically refers to electrically insulated conductors wound into a coil.

In operation, the rotor of conventional electrical devices is driven to rotate by a source of rotation, such as a mechanical or electrical device, which for some aircraft may be a gas turbine engine. The rotor is often rotated at relatively high revolutions per minute (rpm) (e.g., 20,000 -500,000 rpm). In many cases, the rotor can spin relative to the stator in response to an electrical current. The electrical current passing through the rotor and stator creates heat. For example, heat is generated in the rotor due to the flow of current through the windings, and changing magnetic fields present in the rotor, causing the temperature to rise in the rotor. Heat can also be caused by, for example, stator core losses due to hysteresis or eddy currents generated during operation. A particular temperature of the rotor and/or the stator may be maintained (e.g., cooling, etc.) to protect the electrical device from damage and to increase the electrical device power density to allow for more power from a smaller physically sized electrical motor.

Furthermore, due to the relatively linear relation between rotational speed and shaft power of an electrical device, increasing the rated speed of a generator can boost the power density and efficiency of the generator. Accordingly, there is a growing demand for conventional electrical devices to operate at increasingly higher speeds. However, operation of conventional electrical devices at higher speeds can create more heat that is reduced or removed.

Additionally, conventional electrical devices (e.g., generators) can include a stator core having axially extending elongate slots defined therein, with one or more conductive stator windings disposed in the slots. Typically, the stator windings are impregnated with electrically insulative, thermally conductive varnish or resin to conduct heat from the windings. Such varnishes are typically temperature limited, rarely rated above 240°C, in accordance with the International Electrotechnical Commission (IEC) standard IEC 60216-1, and soften as they approach their glass transition temperature, reducing their effectiveness. Additionally, traditional epoxies and varnishes have a maximum thermal conductivity of about 0.3 W/mK, Further, the presence of the varnish often occludes the slots, preventing direct conduction cooling with a cooling fluid.

Further, conventional electrical devices typically employ additional electrically insulative elements such as flexible sleeves, slot liners, wedges, and so called "top sticks" disposed in the slots to fill any voids within the slot not filled by windings or insulation. These insulative elements can reduce vibration of the windings within the slot, provide electrical insulation between phases, and enhance thermal transfer of heat from the windings. In some cases additional thermally conductive varnish or resin can be added to the slots to fill any remaining voids. Fabrication methods for such electrical devices can thus be complex, use multiple parts, and be costly.

Furthermore, conventional electrical insulation materials such as those used in electrical devices can be organic polymeric dielectric materials. The thermal conductivity of such materials is typically 0.3 W/m-K or lower, with typical temperature index of less than 260°C. Additionally, in many cases, typical electrical insulation materials used in electrical devices are not thermally conductive and act as a thermal barrier preventing heat dissipation. Such arrangements of conventional electrical insulation material in electrical devices can result in a limited power density of the electrical devices to maintain operating temperatures below 260°C due to thermal capability of the traditional electrical insulation material. This can be particularly problematic in certain applications and industries. For example, the aviation industry (e.g., electrified aircraft propulsion (EAP)), which has electrical environments utilizing high power density electrical components, with exposure to relatively high temperatures (e.g., above 140°C).

Additionally, some electrical devices can be further limited in their application or operation due to partial discharge or corona issues under certain conditions. For example, problems associated with partial discharge can exacerbate in high altitude aerospace environment where a partial discharge inception voltage (PDIV) and partial discharge extinction voltage (PDEV) is much lower than at sea level due to lower air pressure. High voltage electrical devices, (e.g., motors or generators) such as those in which the windings on the stator are operated at potentials over 300 Volts (V) (e.g., 10,000 V), in relation to a grounded stator core, are particularly susceptible to partial discharge. Accordingly, windings in an aircraft generator may be limited to particular currents, voltages, or the like, due to operational characteristics at flying altitudes. These limitations can, in turn, limit the effectiveness or efficiency of the electrical devices, themselves. In one non-limiting example, typical electrical devices may be limited to 300V or less at sea level or cruise altitude.

The PDIV and PDEV of conventional electrical devices can be increased by adding layers of insulation to the windings to ensure that undesired events, such as an internal partial discharge, does not occur. While increasing the thickness of the insulation layers, can reduce PDIV and PDEV issues, the overall space within the electrical device for the stator windings is decreased as the thickness of the insulation layers increases. Alternatively, the spacing between stator windings with relatively high voltage potential (e.g., over 300V) can be increased in order to reduce electrical stresses. However, by adopting thicker insulation, and/or increasing winding spacing will lead to larger device sizes with low volume power density (e.g., in terms of weight or volume). Other conventional methods to suppress partial discharge in stator windings have also included the use of a relatively low electrical resistance, (e.g., 1000 ohms per square) semiconductive coating or finishing tape (e.g., a polyester tape) on the windings. However, existing suitable commercially available material for partial discharge reduction is limited to service temperature of below a 180°C temperature rating (e.g., Class H) thereby limiting the operational temperature rating or the power rating, or both, of electrical devices used in aircraft.

Non-limiting aspects as disclosed herein relate to an electrical insulation system for electrical devices, and method of forming. For example, as disclosed herein, an electrical device can include at least one electrical conductor having an electrical insulation system coupled thereto, the electrical insulation system including at least one electrically insulative, thermally conductive CMC layer and a bonding layer to fixedly couple the CMC layer to the at least one electrical conductor The CMC layer can be coupled to at least a portion of the electrical conductor. In some aspects, the CMC layer can be used in lieu of, or in addition to, conventional electrical insulation (e.g., organic polymeric electrical insulation).

Aspects as disclosed herein can provide an improved electrical device that overcomes the above noted shortcomings and can provide improved operational performance over conventional electrical devices. Aspects as disclosed herein can further enable electrical devices having improved power density and/or temperature ratings over conventional electrical devices. For example, in the non-limiting aspect of an electrical device, wherein the electrical device is an electrical motor or generator, aspects as disclosed herein can reduce or eliminate varnish or resin impregnation of the rotor and stator windings, as well as reduce or eliminate sleeves, slot liners, wedges, and top sticks.

Furthermore, aspects as disclosed herein can employ inorganic CMC materials which are highly resistant to corona discharge, in contrast to conventional organic (e.g. polymeric) insulators, and can provide improved corona resistance over conventional arrangements.

Aspects as disclosed herein can further improve dielectric performance, provide higher temperature ratings, and improve thermal conductivity, over conventional electrical insulators. Additionally, aspects as disclosed herein can enable operation of electrical devices at significantly higher operating and ambient temperatures, with improved heat dissipation, as well as with more output electric power with enhanced reliability than conventional arrangements.

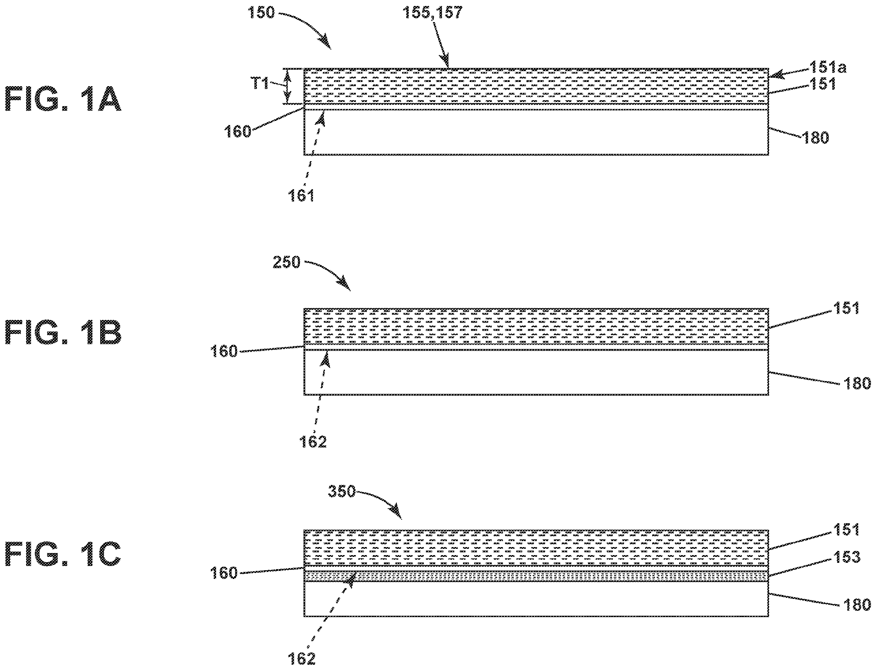

FIG. 1A depicts an isometric view of a portion of a non-limiting aspect of an electrical insulation system 150. The electrical insulation system 150 can include a CMC layer 151 and a bonding layer 160. The CMC layer 151 can be fixedly coupled to at least a portion of a corresponding electrical conductor 180 for an electrical device 100 (e.g., a bus bar) via the bonding layer 160. For example, in non-limiting aspects, the electrical conductor 180 can include, without limitation, a copper bus bar, a DC-link of a power converter, a conductive substrate for a power overlay device, and the like.

In non-limiting aspects, the bonding layer 160 can comprise an adhesive material 161 such as an organic or phenolic type adhesive. For example, in one non-limiting instance the adhesive material 161 can be a varnish. In other non-limiting aspects, the bonding layer 160 can comprise an inorganic adhesive such as a ceramic adhesive. It is contemplated that the adhesive material 161 can be deposited on a periphery of the CMC layer 151, the corresponding electrical conductor 180, or both, for example via a conventional vapor pressure infusion process. In other aspects, the adhesive material 161 can be deposited via spraying, painting, immersing, or other techniques without departing from the scope of the disclosure herein. The CMC layer 151 can then be coupled to the electrical conductor 180 via the adhesive material 161. For example, the CMC layer 151 can be held, pressed, clamped, or joined to the electrical conductor 180 and affixed thereto via the adhesive material 161. In some aspects, the adhesive material 161 can be cured at elevated temperatures or other known hardening techniques.

In non-limiting aspects, the CMC layer 151 can be a dielectric material that is thermally conductive. The CMC layer 151 can include a composite material having ceramic reinforcing fibers disposed in a ceramic matrix material. For example, in non-limiting aspects, the CMC layer 151 can include an electrically insulative, thermally conductive ceramic matrix material 155 and an electrically insulative, thermally conductive inorganic ceramic fiber material 157. The CMC layer 151 can include one or more plies 151a.

In non-limiting aspects, the thermally conductive ceramic matrix material 155 can be selected from a group containing aluminum oxide (Al2O3), boron nitride (BN), aluminum nitride (AlN), silicon nitride (Si3N4), titanium dioxide (TiO2), silicon dioxide (SiO2), and zirconium dioxide (ZrO2). The thermally conductive ceramic matrix material 155 can be one or more of the aforementioned group members. In non-limiting aspects, the ceramic fiber material 157 can be selected from a group containing Al2O3, BN, AlN, Si3N4, TiO2, SiO2, and ZrO2. The ceramic fiber material 157 can be one or more of the aforementioned group members.

. In non-limiting aspects, an amount of thermally conductive ceramic matrix material 155 in the CMC layer 151 may be in a range from about 10 volume percent to about 80 volume percent. In some aspects, an amount of the thermally conductive ceramic matrix material 155 in the CMC layer 151 may be in a range from about 20 volume percent to about 60 volume percent.

The CMC layer 151 may be further characterized by functional characteristics, such as, without limitation, strength, stiffness, and resistance to thermal and mechanical stresses, temperature capability, thermal conductivity, resistivity, dielectric strength, dielectric loss, and the like. For example the functional characteristics of the CMC layer can be configured by arranging or adjusting one or more of the number of plies 151a, a thickness of the plies 151a, a type of the thermally conductive ceramic matrix material 155, a type of the ceramic fiber material 157, a ratio of the amount of the thermally conductive ceramic matrix material 155 to the ceramic fiber material 157, an orientation, distribution, or packing of the ceramic fiber material 157, a density of the CMC layer 151, a porosity of the CMC layer 151, a thickness of the CMC layer 151, or combinations thereof.

For example, in various aspects, the CMC layer 151 can have a temperature capability of at least 300°C in accordance with standard IEC 60216-1. In other non-limiting aspects, the CMC layer 151 can have a temperature capability of at least 400°C in accordance with standard IEC 60216-1. In still other non-limiting aspects, the CMC layer 151 can have a temperature capability of at least 500°C in accordance with standard IEC 60216-1. In other various aspects, the CMC layer 151 can have an electrical resistivity of at least 10^8 ohm meters (Ω·m) at a temperature of up to 500°C. In still other various aspects, the CMC layer 151 can have a dielectric loss of less than 0.201 at temperatures up to 500 °C.

The CMC layer 151 can define a first thickness T1. In some aspects, the CMC layer 151 can have a first thickness T1 in a range of about 0.025 millimeters (mm) to about 0.5 mm. In other aspects, the CMC layer 151 can have any desired first thickness T1 without departing from the scope of the disclosure herein.

In various aspects, the CMC layer 151 can include one or more plies 151a each ply 151a having a respective second thickness (not shown). Each ply 151a includes the thermally conductive ceramic matrix material 155 and the ceramic fiber material 157. Filaments (e.g., tow) of the ceramic fiber material 157 can be randomly intermingled or arranged in a pattern. In some aspects, each respective ply 151a may have a second thickness in a range of about 100 microns to about 200 , inclusive. In non-limiting aspects a fiber diameter of the ceramic fiber material 157 can be in the range of 5-15 microns, inclusive. In various aspects, a thickness of the ply 151a can be based in part on a fiber diameter of the ceramic fiber material 157. For example, in one non-limiting instance, for a single ply 151a having a second thickness of 200um (e.g., 8 mil), a fiber diameter in the range of 10-12 can be used. In another non-limiting example, for a single ply 151a having a second thickness of 100um (e.g., 4 mil) a fiber diameter in the range of 5-6 microns can be used. In other aspects, each respective ply 151a can have any second thickness, and any fiber diameter, without departing from the scope of the disclosure herein. It will be appreciated that a sum of the respective second thicknesses of the one or more plies 151a can be substantially equal to the first thickness T1.

In non-limiting aspects, the CMC layer 151 can include a single ply 151a. In other non-limiting aspects, the CMC layer 151 can be formed as a laminate of multiple plies 151a stacked together. In various non-limiting aspects, physical properties of the CMC layer 151, such as without limitation, strength, stiffness, and resistance to thermal and mechanical stresses, thermal conductivity, resistivity, dielectric strength, dielectric loss, and the like can be arranged by varying one or more of the number and thickness of the plies 151a, the type and relative amounts of thermally conductive ceramic matrix material 155 and the ceramic fiber material 157, the orientation of the ceramic fiber material 157, the density, the porosity, the second thickness, or combinations thereof, of each ply 151a.

In some aspects, the CMC layer 151 can be substantially conformal, meaning it is continuous and conforms to the contours (e.g., surface features, including troughs, channels, edges, corners, and surface irregularities) of the corresponding electrical conductor 180. Further, the CMC layer 151 can be substantially free of voids and cracks. For example, in non-limiting aspects, the CMC layer 151 can have a porosity of less than 10%. A predetermined porosity can be obtained during fabrication of the CMC layer 151 by various known techniques such as such as hot pressing, hot isostatic pressing, or high-temperature sintering.

In non-limiting aspects, the CMC layer 151 can have a dielectric breakdown strength that is equal to or greater than 10kV/mm at temperatures up to at least 500 °C. The dielectric breakdown strength of the CMC layer 151 may be affected by a thickness of the CMC layer 151 and/or a porosity of the CMC layer 151. In particular, the dielectric breakdown strength of the CMC layer 151 can be increased by increasing the first thickness T1 or decreasing the porosity, or both, of the CMC layer 151. For example, in non-limiting aspects, the CMC layer 151 can be configured to have a porosity of less than 10%. The porosity can be obtained or adjusted during fabrication of the CMC layer 151 by various techniques such as such as hot pressing (e.g., applying heat and pressure simultaneously), hot isostatic pressing (e.g., applying pressure uniformly in all directions at elevated temperatures), or high-temperature sintering.

In another example, the dielectric breakdown strength of various aspects of the CMC layer 151 can be correlated to a particular first thickness T1 or porosity, or both of the CMC layer 151. It is further contemplated that a predetermined first thickness T1 of the CMC layer 151 can be arranged (e.g., to meet a specified dielectric breakdown strength) by configuring the number of plies 151a, or the second thickness of each respective ply 151a, or both. For example, in one non-limiting instance, a particular first thickness T1 (e.g., 6 mils) of the CMC layer 151 can be correlated to a particular specified dielectric breakdown strength (e.g., 10 kV/mm). In such an instance, the particular first thickness T1 (e.g., 8 mils) can be arranged by configuring a single ply 151a, having a second thickness substantially equal to 200 microns (e.g., 8 mil) , or by configuring two plies 151a each ply 151a having a second thickness substantially equal to 100 microns (e.g., 4 mils), inclusive. In other aspects, each ply 151a can have any thickness, without departing from the scope of the disclosure herein.

In some non-limiting aspects, the CMC layer 151 can have a thermal conductivity of greater than 1.0 W/mK. In non-limiting aspects, the CMC layer 151 can have a thermal conductivity greater than 3 W/m-K. In other aspects, the CMC layer 151 can have a thermal conductivity greater than 10 W/m-K. In other aspects, the CMC layer 151 can have a thermal conductivity between 10 W/m-K and 20 W/m-K. In still other aspects the CMC layer 151 can have a thermal conductivity between 20 W/m-K and 80 W/m-K. In yet other aspects the CMC layer 151 can have a thermal conductivity between 80 W/m-K and 90 W/m-K, inclusive. The improved thermal conductivity may be achieved based at least in part on the distribution, packing, and/or content of the thermally conductive ceramic matrix material 155 within the CMC layer 151.

FIG. 1B depicts an isometric view of a portion of another non-limiting aspect of an electrical insulation system 250 coupled to at least a portion of the corresponding electrical conductor 180, in accordance with another non-limiting aspect. The electrical insulations system 250 depicted in FIG. 1B is similar to the electrical insulation system 150 of FIG. 1A, and like parts are labelled with like reference numbers. One notable difference between the electrical insulation system 250of FIG. 1B and the electrical insulation system 150of FIG. 1A is that the bonding layer 160 of FIG. 1B includes a metal alloy 162. It is contemplated that the metal alloy 162 can be disposed on the CMC layer 151, or the electrical conductor 180, via an electroplating process. The metal alloy 162 can include any desired metal or metal alloy such as, but not limited to, titanium, iron, aluminum, stainless steel, brass, copper, and nickel alloys. In non-limiting aspects, the metal alloy 162 can have a first melting point that is less than a second melting point of the corresponding electrical conductor 180.

The CMC layer 151 can be coupled to the corresponding electrical conductor 180 by heating the metal alloy 162 until it melts. The melted metal alloy 162 can flow into any gaps between the CMC layer 151 and the corresponding electrical conductor 180, creating a strong bond upon cooling. In other non-limiting aspects, the heating of the metal alloy 162 can be done while pressure is applied (e.g., via clamping) to the CMC layer 151 and the corresponding electrical conductor 180.

FIG. 1C depicts an isometric view of a portion of another non-limiting aspect of an electrical insulation system 350 having the CMC layer 151 coupled to at least a portion of the corresponding electrical conductor 180, in accordance with another non-limiting aspect. The electrical insulation system 350 depicted in FIG. 1C is similar to the electrical insulation system 150 of FIG. 1A, and like parts are labelled with like reference numbers. One notable difference between the electrical insulation system 350of FIG. 1C and the electrical insulation system 150of FIG. 1A is that an electrical insulation layer 153 comprising an organic insulative material is disposed between the bonding layer 160 and the corresponding electrical conductor 180. For example, in some instances, the electrical insulation system 150 can be affixed to an electrical conductor 180 already having an organic insulative coating or sleeve (e.g., in a retrofit application or upgrade). It is further contemplated that in non-limiting aspects, the electrical insulation layer 153 can be a sleeve (e.g., an organic or thermoplastic polymer sleeve) or other electrically insulative wrap, coating, film, layer, or barrier disposed on the corresponding electrical conductor 180. For example, in non-limiting aspects, the electrical insulation layer 153 can include, without limitation, polyimide, polyether ketone (PEEK), polyethylene naphthalate (PEN), polyethylene terephthalate (PET), polyether imide (PEI/Ultem), or the like. In one non-limiting aspect, the electrical insulation layer 153 can include a mica sheet. The mica sheet can be impregnated with a polymer resin. In another non-limiting aspect, the electrical insulation layer 153 can be an enamel coating disposed on the corresponding electrical conductor 180.

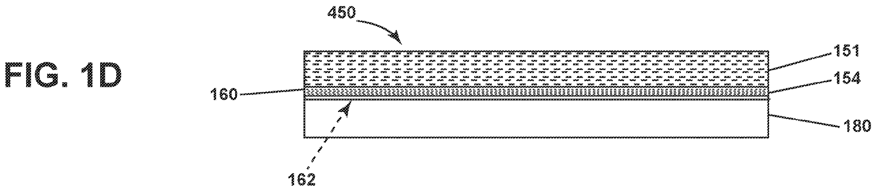

FIG. 1D depicts an isometric view of a portion of yet another non-limiting aspect of an electrical insulation system 450 having a CMC layer 151 coupled to at least a portion of the corresponding electrical conductor 180 in accordance with another non-limiting aspect. The electrical insulation system 450 depicted in FIG. 1D is similar to the electrical insulation system 150of FIG. 1A, and like parts are labelled with like reference numbers. One notable difference between the electrical insulation system of FIG. 1D and the electrical insulation system 150of FIG. 1A is that the electrical insulation system 450 of FIG. 1D includes a diamond layer 154 disposed between the CMC layer 151 and the bonding layer 160.

In non-limiting aspects, the diamond layer 154 can comprise isotopically pure carbon-12 diamond. In other non-limiting aspects, the diamond layer 154 can include isotopically pure carbon-13 diamond. The diamond layer 154 can be applied to the CMC layer 151 facing the corresponding electrical conductor 180 via thin film deposition, bonding, microwave chemical vapor deposits (MVCVD), hot filament-based chemical vapor deposits (CVD), or the like. In other non-limiting aspects, the diamond layer 154 can alternatively be a prefabricated sheet (e.g., a membrane) such as a diamond sheet. The prefabricated sheet can be rigid or flexible.

The diamond layer 154 can provide a smoother surface finish to enhance thermal conduction between the CMC layer 151 facing or coupled to the corresponding electrical conductor 180. The diamond layer 154 can have a relatively high thermal conductivity (about1800 W/m·k).

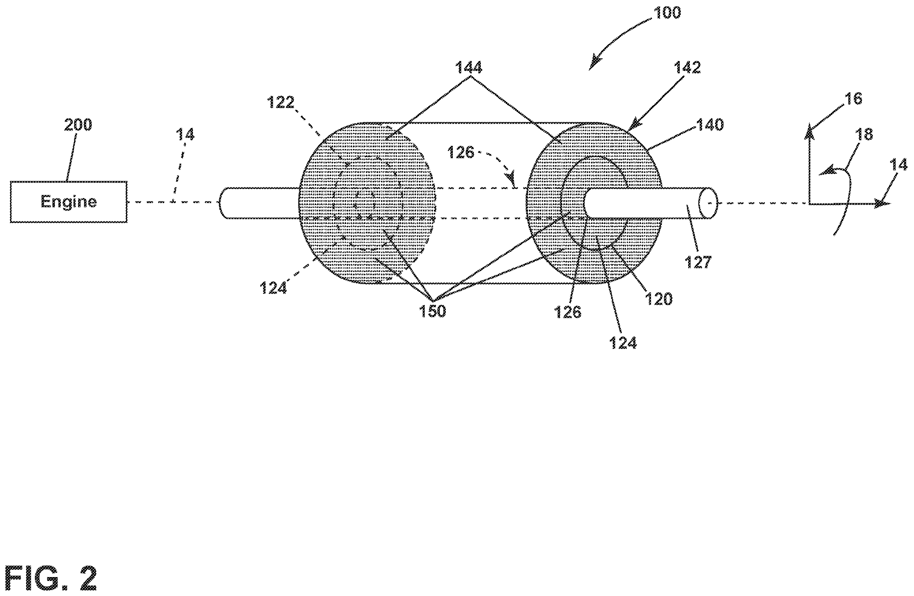

FIG. 2 is a perspective view of an exemplary aspect of an electrical device 100 (e.g., an electric generator) coupled to an engine 200 (e.g., an engine of an automobile or an aircraft), the electrical device including the electrical insulation system 150 of FIG. 1A. While the illustrated electrical device 100 is an electrical machine such as electric generator, it should be appreciated that the methods discussed herein are applicable to other electrical devices, such as electric motors. In the illustrated aspect, the electrical device 100 may be described relative to an axial direction 14, a radial direction 16, and a circumferential direction or an annular direction 18. The electrical device 100 (e.g., a generator) includes a rotor assembly 120 and a stator assembly 140, which may be concentrically aligned about the axial direction 14 of the electrical device 100. The rotor assembly 120 is configured to rotate in the annular direction 18 relative to the stator assembly 140. The rotational energy (e.g., the relative rotation between the rotor assembly 120 and the stator assembly 140) is converted to electrical current in an armature or power generation winding within the stator or rotor assembly, depending on the design of the electrical device 100.

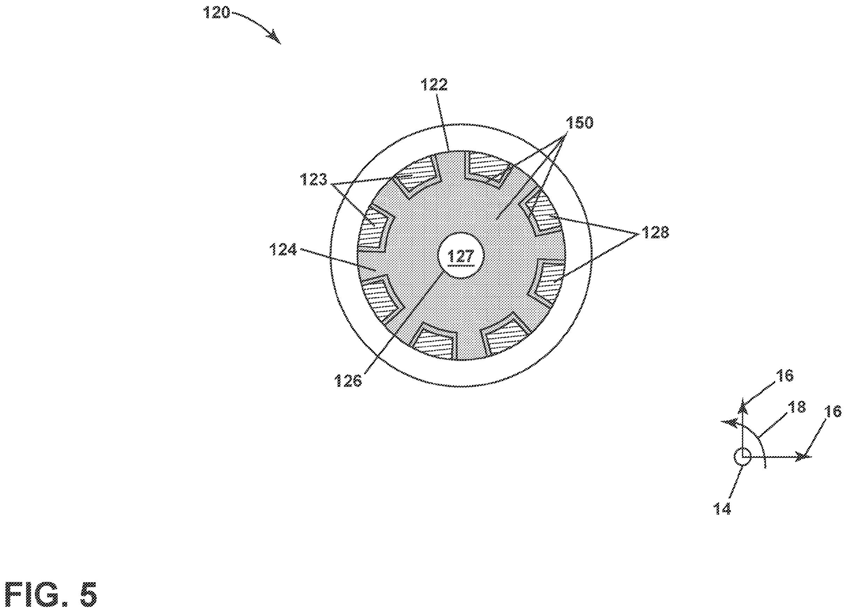

The rotor assembly 120 includes a rotor core 122 that has end faces 124. The rotor core 122 includes a rotor bore 126. The rotor assembly is mounted on a shaft 127 disposed through the rotor bore 126 such that the rotor core 122 rotates together with the shaft 127. The stator assembly 140 includes a stator core 142 having end faces 144. Further, the rotor assembly 120 and the stator assembly 140 generally both include coil windings, which are illustrated and discussed below with respect to FIGS. 2-4. In certain aspects, the rotor assembly 120 includes field windings that generate a magnetic field, and the stator assembly 140 includes armature or power generation windings that generate electrical power as the rotor assembly 120 rotates. In other aspects, the stator assembly 140 may include field windings, and rotor assembly 120 may include the armature or power generation windings. In non-limiting aspects, the electrical insulation system 150 can be arranged to electrically insulate a corresponding conductive component of the electrical device 100 from other electrically conductive components, wiring, or personnel. For example, a respective electrical insulation system 150 can be arranged to electrically insulate, without limitation, the rotor core 122, the stator core, 142, the rotor winding 123, the stator winding 143, and combinations thereof. As illustrated in FIGS. 2-5, and discussed below, at least a portion of the rotor core 122, the stator core, 142, the rotor winding 123, and the stator winding 143 may each be coupled to or covered by a respective electrical insulation system 150. In the aspect illustrated in FIG. 2, the electrical insulation system 150 is illustrated as being coupled to or insulating both the rotor core 122 and the stator core 142. However, aspects wherein the electrical insulation system 150 is arranged to insulate one of the rotor core 122 or the stator core 142 (e.g., from other electrical conductors and personnel) are also envisaged within the scope of the disclosure. Similarly, aspects wherein the electrical insulation system 150 is in contact with or coupled to one of the rotor winding 123 and the stator winding 143 are also envisaged within the scope of the disclosure. Further, the electrical insulation system 150 may be in contact with or coupled to the surface or a portion of the surface of the rotor core 122, the stator core 142, the rotor winding 123, or the stator winding 143.

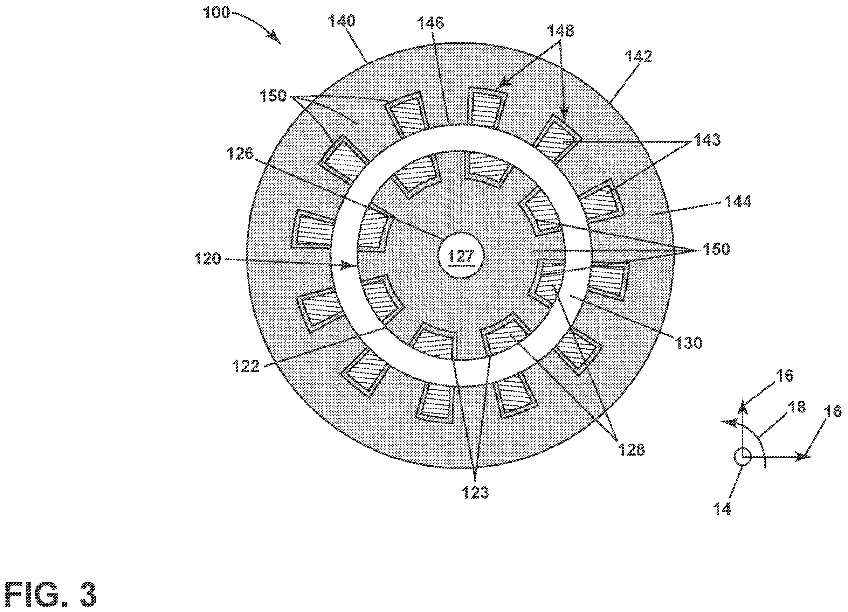

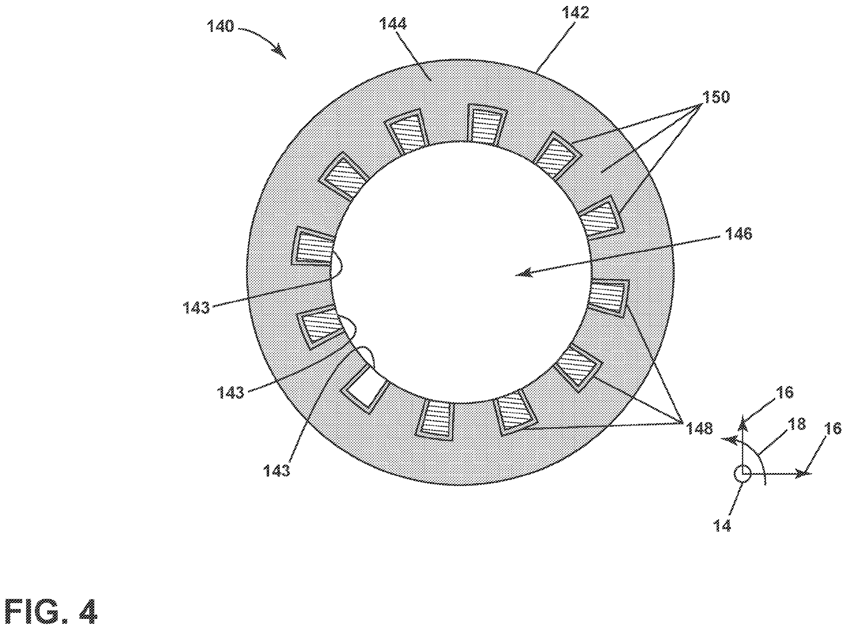

FIG. 3 is a front view of the stator assembly 140 and the rotor assembly 120 of the aspect of the electrical device 100, illustrated in FIG. 2. The stator assembly 140 may include the stator core 142 having the end faces 144, an axially extending stator bore 146 (e.g., extending in the axial direction 14), and a plurality of slots or stator slots 148 that extend radially (e.g., in radial directions 16) away from the stator bore 146, and extend axially (e.g., in the axial direction 14) through the stator core 142. The stator core 142 may be formed from a series of laminations (e.g., laminated steel) or may take on other suitable forms, e.g., a unitary structure manufactured using an additive manufacturing technique. The illustrated stator assembly 140 includes stator winding 143 (also referred to as stator coils) having portions extending axially through the stator slots 148. The rotor assembly 120 is disposed within the stator bore 146 and extends axially along the stator bore 146. The illustrated rotor assembly 120 includes the rotor core 122 and a plurality of rotor slots 128 that extend radially (e.g., in radial directions 16) toward the shaft 127, and extend axially (e.g., in the axial direction 14) through the rotor core 122. There is typically a gap 130 (e.g., an air gap) present between the rotor assembly 120 and the stator core 142. The illustrated rotor assembly 120 includes a rotor winding 123 (also referred to as rotor coils) having portions extending axially through the rotor slots 128. The rotor winding 123 may be either a field winding or a power generation winding, depending on the electrical device arrangement. In some aspects, the electrical insulation system 150 may be selectively coupled to or arranged to cover portions of the surfaces of the rotor core, 122, the rotor winding 123, the stator core 142, the stator winding 143, or combinations thereof. For example, a respective electrical insulation system 150 can be disposed in one or more of the rotor slots 128, or one or more of the stator slots 148, or both, (e.g., in lieu of a conventional polymeric slot liners), and can conform to the geometric shape of the respective rotor slots 128, or stator slots 148, or both. As can be seen, the respective electrical insulation systems 150 are not limited to a particular shape. In various non-limiting aspects, each electrical insulation system 150 can have a shape complementary to a shape of a corresponding conductor, or an external surface thereof, such as the surfaces of the rotor core, 122, the rotor winding 123, the stator core 142, the stator winding 143 It is contemplated that in various aspects the electrical insulation system 150 can be arranged to have any desired shape or geometry. The different alternative configurations of the insulated portions of the electrical device 100 are further described herein with reference to FIGS. 4-5.

The electrical conductors (e.g. the rotor windings, stator windings, rotor core, stator core, and the like) of the electrical device 100 may be manufactured using any suitable method, such as, for example, including the steps of winding, enameling, lamination and the like. In certain aspects, the electrical conductors of the electrical device 100 can be additively-manufactured using known techniques.

Conventionally, stator and rotor assemblies are assembled using multiple, sequential steps and components. Typically, for example, stator assemblies are assembled by sequentially inserting slot liner insulation, windings, and wedges into each stator slot, which can be a cumbersome and time-consuming process. This multistep process may further lead to one or more of poor copper winding dimensional tolerance, low copper fill factor, or insulation damage due to severe mechanical stresses during manufacturing and assembly, thereby affecting the robustness and reliability of the insulation.

FIG. 3 illustrates aspects in which an electrical insulation system 150 is selectively coupled to portions of surfaces of one or both of the stator core 142 and the stator winding 143. In some aspects, a respective electrical insulation system 150 may be coupled to at least a portion of the surfaces of the stator slots 148 of the stator core 142. In some aspects, a respective electrical insulation system 150 may be additionally be coupled to at least a portion of the end faces 144 of the stator core 142. In some aspects, a respective electrical insulation system 150 may be additionally or alternatively coupled to at least a portion of the stator winding 143. In certain aspects, the electrical insulation system 150 provides electrical insulation between the stator winding 143 and the stator core 142. As described in detail herein, the electrical insulation system 150 may be coupled to the surfaces, either before the assembly of the stator core 142 and the stator winding 143 to form the stator assembly 140, or after the assembly of the stator core and the stator winding 143.

FIG. 4 illustrates aspects in which the electrical insulation system 150 is selectively coupled to portions of the surfaces of one or both of the rotor core 122 and the rotor winding 123. In some aspects, the electrical insulation system 150 may coupled to at least a portion of the surfaces of the rotor slots 128 of the rotor core 122. In some aspects, a respective electrical insulation system 150 may be additionally coupled to at least a portion of the end faces 124 of the rotor core 122. In some aspects, a respective electrical insulation system 150 may be additionally or alternatively coupled to at least a portion of the rotor winding 123. In certain aspects, the electrical insulation system 150 can operatively provide electrical insulation between the rotor winding 123 and the rotor core 122. As described in detail hereinafter, a respective electrical insulation system 150 can be coupled to the rotor core 122 and the rotor winding 123, either before the assembly of the rotor core 122 and the rotor winding 123, or after the assembly of the rotor core 122 and the rotor winding 123.

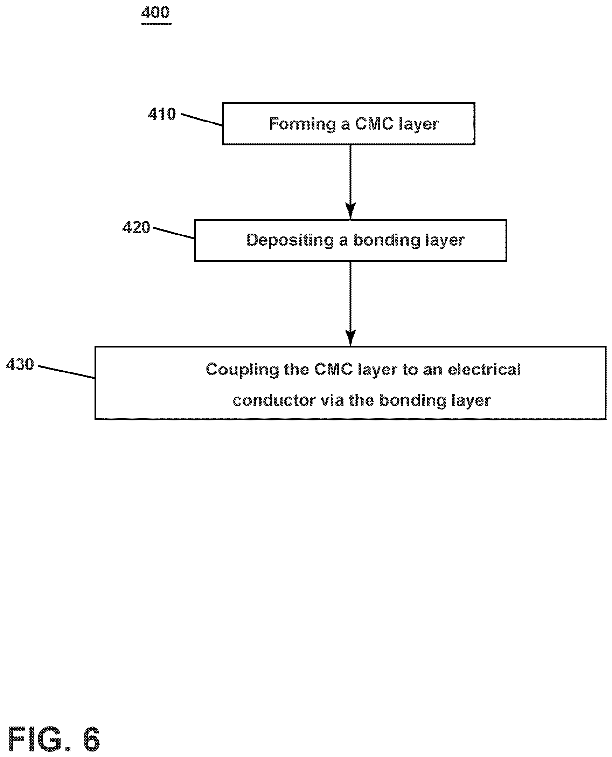

FIG. 6 depicts a method 400 forming an electrical insulation system 150 for an electrical conductor 180 of an electrical device. Although described in terms of an electrical busbar, it will be appreciated that the method 400 can be applicable to any electrical conductor for an electrical device without departing from the disclosure herein. While the method 400 will be described herein, for ease of understanding, in terms of the electrical insulation system 150 of FIGS 1A-1D, and 2-5, other aspects are not so limited and the method 400 can be implemented in any electrical environment without departing from the scope of the disclosure.

The method 400 can include, at 410, forming a CMC layer 151. In non-limiting aspects, the forming the CMC layer 151 can include building up the CMC layer 151 as a stack of plies 151a.

In non-limiting aspects, the CMC layer 151 can include a composite material having ceramic reinforcing fibers disposed in a ceramic matrix material. For example, in non-limiting aspects, the CMC layer 151 can include an electrically insulative, thermally conductive ceramic matrix material 155 and an electrically insulative, thermally conductive inorganic ceramic fiber material 157. In non-limiting aspects, the thermally conductive ceramic matrix material 155 can be selected from a group containing aluminum oxide (Al2O3), boron nitride (BN), aluminum nitride (AlN), silicon nitride (Si3N4), titanium dioxide (TiO2), silicon dioxide (SiO2), and zirconium dioxide (ZrO2). The thermally conductive ceramic matrix material 155 can be one or more of the aforementioned group members. In non-limiting aspects, the ceramic fiber material 157 can be selected from a group containing Al2O3, BN, AIN, Si3N4, TiO2, SiO2, and ZrO2. The ceramic fiber material 157 can be one or more of the aforementioned group members. In non-limiting aspects, an amount of thermally conductive ceramic matrix material 155 in the CMC layer 151 may be in a range from about 10 volume percent to about 80 volume percent. In some aspects, the amount of the thermally conductive ceramic matrix material 155 in the CMC layer 151 may be in a range from about 20 volume percent to about 60 volume percent.

The forming the CMC layer 151 can further include configuring physical properties of the CMC layer 151, by arranging or adjusting one or more of the number of plies 151a, a thickness of the plies 151a, a type of the thermally conductive ceramic matrix material 155, a type of the ceramic fiber material 157, a ratio of the amount of the thermally conductive ceramic matrix material 155 to the ceramic fiber material 157, an orientation, distribution, or packing of the ceramic fiber material 157, a density of the CMC layer 151, a porosity of the CMC layer 151, a thickness of the CMC layer 151, or combinations thereof. Non-limiting examples of the physical properties of the CMC layer 151 can include, without limitation, strength, stiffness, and resistance to thermal and mechanical stresses, temperature capability, thermal conductivity, resistivity, dielectric strength, dielectric loss, and the like.

For example, in non-limiting aspects, the forming the CMC layer 151 can include arranging the CMC layer 151 to have a temperature capability of at least 300°C in accordance with standard IEC 60216-1. In other non-limiting aspects, the CMC layer 151 can have a temperature capability of at least 400°C in accordance with standard IEC 60216-1. In still other non-limiting aspects, the CMC layer 151 can have a temperature capability of at least 500°C in accordance with standard IEC 60216-1. In other non-limiting aspects, the forming the CMC layer 151 can include arranging the CMC layer 151 to have an electrical resistivity of at least 10^8 ohm meters (Ω·m) at a temperature of up to 500°C. In still other non-limiting aspects, the forming the CMC layer 151 can include arranging the CMC layer 151 to have a dielectric loss of less than 0.201 at temperatures up to 500 °C.

In some non-limiting aspects, the forming the CMC layer 151 can further include configuring a relative amount, distribution, packing, or content of the thermally conductive ceramic matrix material 155 or the ceramic fiber material 157, or both, within the CMC layer 151 to arrange a specified thermal conductivity of the CMC layer 151. In non-limiting aspects, the CMC layer 151 can have a thermal conductivity greater than 3 W/m-K. In other aspects, the CMC layer 151 can have a thermal conductivity greater than 10 W/m-K. In other aspects, the CMC layer 151 can have a thermal conductivity between 10 W/m-K and 20 W/m-K. In still other aspects the CMC layer 151 can have a thermal conductivity between 20 W/m-K and 80 W/m-K. In yet other aspects the CMC layer 151 can have a thermal conductivity between 80 W/m-K and 90 W/m-K, inclusive.

In non-limiting aspects, the forming the CMC layer 151 can include arranging the CMC layer 151 to have a dielectric breakdown strength that is equal to or greater than 10kV/mm at temperatures up to at least 500 °C. The dielectric breakdown strength of the CMC layer 151 can be arranged by adjusting a first thickness T1 or a porosity, or both, of the CMC layer 151. For example, the dielectric breakdown strength of the CMC layer 151 can be increased by increasing the first thickness T1 or decreasing the porosity, or both, of the CMC layer 151.

In non-limiting aspects, the forming the CMC layer 151 can include arranging the CMC layer 151 to have a porosity of less than 10%. For example, in non-limiting aspects, the forming the CMC layer 151 can further include hot pressing (e.g., applying heat and pressure simultaneously), hot isostatic pressing (e.g., applying pressure uniformly in all directions at elevated temperatures), or high temperature sintering the CMC layer 151, for example to obtain a predetermined porosity of the CMC layer 151.

In non-limiting aspects, the forming the CMC layer 151 can include configuring a predetermined number of plies 151a having a second thickness, to arrange the CMC layer 151 having the first thickness T1. The predetermined number of plies 151a, or the second thickness of each respective ply 151a can be based on a particular specified dielectric breakdown strength (e.g., 10 kV/mm) of the CMC layer 151. For example, in one non-limiting instance, a particular first thickness T1 (e.g., 6 mils) of the CMC layer 151 can be correlated to a particular specified dielectric breakdown strength (e.g., 10 kV/mm). In such an instance, the particular first thickness T1 (e.g., 8 mils) can be arranged by configuring a single ply 151a, having a second thickness substantially equal to 200 microns (e.g., 8 mil), or by configuring two plies 151a each ply 151a having a second thickness substantially equal to 100 microns (e.g., 4 mils), inclusive. In other aspects, each ply 151a can have any thickness, without departing from the scope of the disclosure herein.

The method 400 can include at 420, depositing a bonding layer 160 on a periphery of the CMC layer 151, or the conductor180, or both. One non-limiting example of depositing the bonding layer 160 can include depositing the adhesive material 161 on a periphery of the CMC layer 151. For example, the adhesive material 161 can be deposited via a vapor pressure infusion process. In other aspects, the adhesive material 161 can be deposited via spraying, painting, or other techniques without departing from the scope of the disclosure herein. The bonding layer 160 can comprise an adhesive material such as an organic or phenolic type adhesive. For example, in one non-limiting instance the adhesive material 161 can be a varnish. In other non-limiting aspects, the adhesive material 161 can comprise an inorganic adhesive material such as a ceramic adhesive.

It is contemplated that in executing non-limiting aspects of the method 400, an electrical insulation layer 153 can be disposed between the bonding layer 160 and the corresponding electrical conductor 180. It is further contemplated that in non-limiting aspects, the electrical insulation layer 153 can be a sleeve (e.g., a thermoplastic polymer sleeve) or other electrically insulative wrap, coating, film, layer, or barrier disposed on the corresponding electrical conductor 180. For example, in non-limiting aspects, the electrical insulation layer 153 can include, without limitation, PEEK, PEN, PET, PEI/Ultem, or the like. In one non-limiting aspect, the electrical insulation layer 153 can include a mica sheet. The mica sheet can be impregnated with a polymer resin. In another non-limiting aspect, the electrical insulation layer 153 can be an enamel coating disposed on the corresponding electrical conductor 180.

It is contemplated that in non-limiting aspects of the method 400, the bonding layer 160 can comprise a metal alloy 162. The metal alloy 162 can include any desired metal alloy such as, but not limited to, titanium, iron, aluminum, stainless steel, brass, copper, and nickel alloys. For example, in non-limiting aspects, the depositing the bonding layer 160 can include depositing the metal alloy 162 on the CMC layer 151 via an electroplating process.

In some non-limiting aspects, the metal alloy 162 can have a first melting point that is less than a second melting point of the corresponding electrical conductor 180. In such aspects, the depositing the bonding layer 160 can include heating the metal alloy 162 until it melts. The melted metal alloy 162 can flow into any gaps between the CMC layer 151 and the corresponding electrical conductor 180, creating a strong bond upon cooling. In other non-limiting aspects, the heating the metal alloy 162 can be done while pressure is applied (e.g., via clamping) to the CMC layer 151 and the corresponding electrical conductor 180.

In some non-limiting aspects, the diamond layer 154 can be disposed between the CMC layer 151 and the bonding layer 160 (e.g., the adhesive material 161). In non-limiting aspects, the diamond layer 154 can comprise isotopically pure carbon-12 diamond. In other non-limiting aspects, the diamond layer 154 can include isotopically pure carbon-13 diamond. The diamond layer 154 can be applied to the CMC layer 151 facing the corresponding electrical conductor 180 via thin film deposition, bonding, MVCVD, CVD, or the like.

The method 400 can include, at 430, coupling the CMC layer 151 to the electrical conductor 180 via the bonding layer 160. In non-limiting aspects, the coupling the CMC layer 151 to the electrical conductor 180 can include holding, pressing, clamping, or joining the CMC layer to the electrical conductor 180 with the bonding layer 160 disposed therebetween.

In some non-limiting aspects, such as when the bonding layer 160 includes the adhesive material 161, the coupling the CMC layer 151 to the electrical conductor 180 can include curing the adhesive material 161. For example, the adhesive material 161 can be cured at an elevated temperature or via exposure to ultraviolet light.

In other non-limiting aspects, such as when the bonding layer 160 includes the metal alloy 162, the metal alloy 162 can have a first melting point that is less than a second melting point of the corresponding electrical conductor 180. In such aspects, the coupling the CMC layer 151 to the electrical conductor 180 can include heating the metal alloy 162 until it melts. The melted metal alloy 162 can flow into any gaps between the CMC layer 151 and the corresponding electrical conductor 180, creating a strong bond upon cooling. In other non-limiting aspects, the heating the metal alloy 162 can be done while pressure is applied (e.g., via clamping) to the CMC layer 151 and the corresponding electrical conductor 180.

The sequence depicted is for illustrative purposes only and are not meant to limit the aspects of the disclosure in any way, as it is understood that the portions of the disclosure of application thereof can proceed in a different logical order, additional or intervening portions can be included, or described portions of the method can be divided into multiple portions, or described portions of the method can be omitted without detracting from the described method.

To the extent not already described, the different features and structures of the various aspects can be used in combination with each other as desired. That one feature cannot be illustrated in all of the aspects is not meant to be construed that it cannot be, but is done for brevity of description. Thus, the various features of the different aspects can be mixed and matched as desired to form new aspects, whether or not the new aspects are expressly described. Combinations or permutations of features described herein are covered by this disclosure. Many other possible aspects and configurations in addition to that shown in the above figures are contemplated by the present disclosure.

To the extent not already described, the different features and structures of the various aspects can be used in combination with each other as desired. That one feature cannot be illustrated in all of the aspects is not meant to be construed that it cannot be, but is done for brevity of description. Thus, the various features of the different aspects can be mixed and matched as desired to form new examples, whether or not the new examples are expressly described. Combinations or permutations of features described herein are covered by this disclosure.

Further aspects of the disclosure are provided by the subject matter of the following clauses:

A ceramic matrix composite (CMC) electrical insulation system coupled to an electrical conductor of an electrical device, the electrical insulation system comprising: a CMC layer comprising: an electrically insulative, thermally conductive ceramic matrix material; an electrically insulative, thermally conductive inorganic ceramic fiber material; and a bonding layer disposed between the CMC layer and the electrical conductor, wherein the CMC layer is fixedly coupled to the electrical conductor by the bonding layer.

A ceramic matrix composite (CMC) electrical insulation system coupled to an electrical conductor of an electrical device, the electrical insulation system comprising: a CMC layer comprising: an electrically insulative, thermally conductive ceramic matrix material; an electrically insulative, thermally conductive inorganic ceramic fiber material; and a bonding layer disposed between the CMC layer and the electrical conductor, wherein the CMC layer is fixedly coupled to the electrical conductor via the bonding layer.

The electrical insulation system of any preceding clause, wherein the bonding layer comprises a metal alloy having a first melting point lower than a second melting point of the electrical conductor.

The electrical insulation system of any preceding clause, wherein the bonding layer comprises an adhesive material.

The electrical insulation system of any preceding clause, wherein the matrix material is selected from a group containing Al2O3, BN, AlN, Si3N4, TiO2, SiO2, and ZrO2.

The electrical insulation system of any preceding clause, wherein the ceramic matrix material is selected from a group containing Al2O3, BN, AlN, Si3N4, TiO2, SiO2, and ZrO2.

The electrical insulation system of any preceding clause, wherein the ceramic fiber material is selected from a group containing Al2O3, BN, AlN, Si3N4, TiO2, SiO2, and ZrO2.

The electrical insulation system of any preceding clause, wherein the CMC layer comprises one or more plies, each ply having a thickness in a range from 100 microns to 200 microns, inclusive.

The electrical insulation system of any preceding clause, wherein the CMC layer has a temperature capacity of at least 500 °C in accordance with standard IEC 60216-1.

The electrical insulation system of any preceding clause, wherein the CMC layer has an electrical resistivity of at least 10^8 ohm meters (Ω·m) at a temperature of up to 500°C.

The electrical insulation system of any preceding clause, wherein the CMC layer has a dielectric loss of less than 0.201 at temperatures up to 500 °C.

The electrical insulation system of any preceding clause, wherein the CMC layer has a thermal conductivity greater than 1 W/m-K.

The electrical insulation system of any preceding clause, wherein the CMC layer has a thermal conductivity greater than 3 W/m-K.

The electrical insulation system of any preceding clause, wherein the CMC layer has a porosity of less than 10%.

The electrical insulation system of any preceding clause, further comprising a diamond layer disposed between the CMC layer and the electrical conductor.

The electrical insulation system of any preceding clause, further comprising a second electrical insulation layer disposed between the CMC layer and the electrical conductor.

The electrical insulation system of any preceding clause, wherein the electrical conductor is at least one of a rotor winding or a rotor core of the electrical device.

The electrical insulation system of any preceding clause, wherein the CMC layer is disposed in a rotor slot defined in the rotor core.

The electrical insulation system of any preceding clause, wherein the electrical conductor is at least one of a stator winding or a stator core of the electrical device.

The electrical insulation system of any preceding clause, wherein the CMC layer is disposed in a stator slot defined in the stator core.

The electrical insulation system of any preceding clause, wherein the electrical conductor is a bus bar.

A method of forming an electrical insulation system for an electrical conductor, the method comprising: forming a CMC layer comprising an electrically insulative, thermally conductive ceramic matrix material, and an electrically insulative, thermally conductive inorganic ceramic fiber material; disposing a bonding layer between the CMC layer and the electrical conductor; and coupling the CMC layer to the electrical conductor via the bonding layer.

The method of any preceding clause, wherein the bonding layer comprises a metal alloy having a first melting point lower than a second melting point of the electrical conductor, and wherein the coupling the CMC layer to the electrical conductor by the bonding layer includes heating the metal alloy until it melts.

The method of any preceding clause, wherein the bonding layer comprises an adhesive material.

The method of any preceding clause, further comprising curing the adhesive material.

The method of any preceding clause, wherein a diamond layer is disposed between the disposed between the CMC layer and the bonding layer.

The method of any preceding clause, wherein the bonding layer comprises a metal alloy having a first melting point lower than a second melting point of the electrical conductor, and wherein the coupling the CMC layer to the electrical conductor via the bonding layer includes heating the metal alloy until it melts.

The method of any preceding clause, wherein the bonding layer comprises an adhesive material, and wherein the coupling the CMC layer to the electrical conductor via the bonding layer includes curing the adhesive material.

The method of any preceding clause, wherein the ceramic matrix material is selected from a group containing Al2O3, BN, AlN, Si3N4, TiO2, SiO2, and ZrO2.

The method of any preceding clause, wherein the ceramic fiber material is selected from a group containing Al2O3, BN, AlN, Si3N4, TiO2, SiO2, and ZrO2.

The method of any preceding clause, wherein the forming the CMC layer includes arranging the CMC layer to have a thermal conductivity of greater than 3 W/m-K.

The method of any preceding clause, wherein the forming wherein the forming the CMC layer includes arranging the CMC layer to have a temperature capacity of at least 500 °C in accordance with standard IEC 60216-1.

The method of any preceding clause, wherein the forming the CMC layer includes arranging the CMC layer to have a temperature capacity of at least 500 °C in accordance with standard IEC 60216-1.

The method of any preceding clause, wherein the forming the CMC layer includes arranging the CMC layer to have an electrical resistivity of at least 10^8 ohm meters (Ω·m) at a temperature of up to 500°C.

The method of any preceding clause, wherein the forming the CMC layer includes arranging the CMC layer to have a dielectric loss of less than 0.201 at temperatures up to 500 °C.

The method of any preceding clause, wherein the forming the CMC layer includes arranging the CMC layer to have a thermal conductivity greater than 1 W/m-K.

The method of any preceding clause, wherein the forming the CMC layer includes arranging the CMC layer to have porosity of less than 10%.

The method of any preceding clause, wherein the CMC layer comprises one or more plies, each ply having a thickness in a range from 100 microns to 200 microns, inclusive.

The method of any preceding clause, wherein the electrical conductor is a rotor core of the electrical device.

The method of any preceding clause, wherein the CMC layer is disposed in a rotor slot defined in the rotor core.

The method of any preceding clause, wherein the electrical conductor is a stator core of the electrical device.

The method of any preceding clause, wherein the CMC layer is disposed in a stator slot defined in the stator core.

The method of any preceding clause, wherein the electrical conductor is a bus bar.

## Claims

1. A ceramic matrix composite (CMC) electrical insulator (150) coupled to an electrical conductor (180) of an electrical device (100), the electrical insulator (150) comprising:
a CMC layer (151) comprising:
an electrically insulative, thermally conductive matrix material (155); and
an electrically insulative, thermally conductive inorganic ceramic fiber material (157).

2. The CMC electrical insulator (150) of claim 1, wherein the matrix material (155) is selected from the group containing Al2O3, BN, AlN, Si3N4, TiO2, SiO2, and ZrO2.

3. The CMC electrical insulator (150) of claim 1, wherein the ceramic fiber material (157) is selected from the group containing Al2O3, BN, AlN, Si3N4, TiO2, SiO2, and ZrO2.

4. The CMC electrical insulator (150) of any preceding claim, wherein the CMC layer (151) comprises one or more plies (151a), each ply (151a) having a thickness in a range from 100µm to 200µm, inclusive.

5. The CMC electrical insulator (150) of any preceding claim, wherein the CMC layer (151) has a temperature capacity of at least 500 °C in accordance with standard IEC 60216-4.

6. The CMC electrical insulator (150) of any preceding claim, wherein the CMC layer (151) has an electrical resistivity of at least 10^8 ohm meters (Ω·m) at a temperature of up to 500°C.

7. The CMC electrical insulator (150) of any preceding claim, wherein the CMC layer (151) has a dielectric loss of less than 0.201 at temperatures up to 500 °C.

8. The CMC electrical insulator (150) of any preceding claim, wherein the CMC layer (151) has a thermal conductivity greater than 1 W/m-K.

9. The CMC electrical insulator (150) of any preceding claim, wherein the CMC layer (151) has a porosity of less than 10%.

10. The CMC electrical insulator (150) of any preceding claim, wherein the CMC layer (151) is fixedly coupled to the electrical conductor (180) via an adhesive layer (162).

11. The CMC electrical insulator (150) of any preceding claim, wherein the CMC layer (151) is fixedly coupled to the electrical conductor (180) via a tape wrap (169).

12. The CMC electrical insulator (150) of any preceding claim, further comprising a metallic layer (52) disposed between the CMC layer (151) and the electrical conductor (180).

13. The CMC electrical insulator (150) of claim 12, wherein the metallic layer (152) has a first melting point lower than a second melting point of the electrical conductor (180).

14. The CMC electrical insulator (150) of any preceding claim, further comprising a diamond layer (154) disposed between the CMC layer (151) and the electrical conductor (180).

15. The CMC electrical insulator (150) of any preceding claim, further comprising an electrical insulation layer (153) disposed between the CMC layer (151) and the electrical conductor (180).
